# EUROPÄISCHE PATENTSCHRIFT

(11) **EP 4 385 091 B1**
(45) Veröffentlichungstag und Bekanntmachung des Hinweises auf die Patenterteilung: **05.11.2025**
(21) Anmeldenummer: 22757217.9
(22) Anmeldetag: 20.07.2022
(51) Int. Cl.: H01M 10/653, H01M 10/6551, H01M 10/6554, H01M 10/6556, H01M 10/625, H01M 10/643, H01M 10/6567, H01M 50/213, H01M 50/229, H01M 50/233

(54) **BATTERIEMODUL UND MODULGEHÄUSE SOWIE VERFAHREN ZUR HERSTELLUNG DES MODULGEHÄUSES**
BATTERY MODULE, MODULE HOUSING, AND PROCESS FOR MANUFACTURING THE MODULE HOUSING
MODULE DE BATTERIE, BOÎTIER DE MODULE ET PROCÉDÉ DE FABRICATION DU BOÎTIER DE MODULE

(30) Priorität: 09.08.2021 DE 102021120654
(43) Veröffentlichungstag der Anmeldung: 19.06.2024
(73) Patentinhaber: ElringKlinger AG, 72581 Dettingen (DE)
(72) Erfinder: HANTSCHEL, Jochen, 72581 Dettingen a.d.Erms (DE); SCHMIDT, Tobias, 72124 Pliezhausen (DE); DWENGER, Stefan, 72762 Reutlingen (DE)
(74) Vertreter: Hoeger, Stellrecht & Partner Patentanwälte mbB
(86) Internationale Anmeldenummer: PCT/EP2022/070361
(87) Internationale Veröffentlichungsnummer: WO 2023/016765

(56) Entgegenhaltungen:
- WO-A1-2020/027299
- DE-A1- 102013 225 574
- DE-U1- 202019 102 427
- KR-A- 20200 033 784

## Beschreibung

Die vorliegende Erfindung betrifft ein Batteriemodul für den Einsatz in einem Batteriesystem, vorzugsweise in Elektrofahrzeugen, mit einem Modulgehäuse, in dem mehrere Batteriezellen untergebracht oder unterzubringen sind und das wenigstens aus einer Bodenplatte und zumindest einer Seitenwand, vorzugsweise mehreren Seitenwänden, besteht

In Elektrofahrzeugen und anderen Anwendungen werden üblicherweise Batteriespeicher bzw. Batteriesysteme eingesetzt. Diese Batteriespeicher oder -systeme sind in der Regel aus Batteriemodulen aufgebaut, welche ihrerseits mehrere einzelne Batteriezellen aufweisen. Die Batteriezellen sind mit Stromsammelschienen des Batteriemoduls verbunden. Die Gesamtheit der Batteriezellen eines Batteriemoduls wird häufig auch als "Zellpaket" bezeichnet.

An die Batteriemodule werden vielfältige Anforderungen gestellt. So müssen die in dem Batteriemodul untergebrachten Batteriezellen mechanisch sicher fixiert sein. Zugleich müssen diese aber auch sowohl gegeneinander, als auch gegenüber dem Gehäuse des Batteriemoduls elektrisch sicher isoliert sein. Und schließlich müssen die Batteriezellen entwärmt werden, d.h. die von ihnen produzierte Wärme muss abgeführt werden.

Zur Lösung dieser Anforderungen wird bei bekannten Batteriemodulen eine metallische Bodenplatte eingesetzt, die relativ gut wärmeleitend ist und die auch zur Wärmeabfuhr beiträgt. Ein Problem stellt allerdings die elektrische Isolation dar. Sind die Batteriezellen wie üblich in Reihenschaltung verschaltet, befinden sie sich nämlich nicht auf demselben elektrischen Potenzial. Zudem ergeben sich bei der Reihenschaltung mehrerer Batteriemodule Systemspannungen bis zu 800 oder 1 000 Volt Gleichstrom (800 bis 1 000 V_{DC}). Das hat zur Folge, dass die Isolationsprüfspannung der Batteriezellen gegenüber dem Modulboden, der dem Gehäusepotenzial zuzurechnen ist, nach der Testnorm LV 123 für Hochvoltkomponenten in Elektro- und Hybridfahrzeugen mindestens 2 150 V_{DC} beträgt.

Daher ist bei den bekannten Batteriemodulen der Einsatz zusätzlicher Isoliermaßnahmen bzw. -bauteile zwischen der metallischen Bodenplatte und den individuellen Batteriezellen erforderlich. Üblicherweise werden dafür Isolierfolien, z.B. aus Polypropylen, verwendet. Auch eine elektrisch isolierende Beschichtung der Bodenplatte kommt in Frage; diese ist jedoch herstellungstechnisch aufwendig.

Ein anderes Problem der bekannten Batteriemodule ist die Entwärmung der Batteriezellen. Dafür werden nach dem Stand der Technik sogenannte Kühlkanalgeometrien, d.h. Kühlkanäle, die beispielsweise in Zickzackform o.dgl. ausgelegt sind, um einen möglichst umfassenden Wärmekontakt des Kühlmittels mit den zu entwärmenden Batteriezellen herzustellen, verwendet. Diese Kühlkanalgeometrien werden in eine kühlmitteldurchflossene Kühlplatte, die mit der Bodenplatte des Batteriemodul in thermischem Kontakt steht, oder in die Bodenplatte selbst, integriert. Die Kühlplatte oder die Bodenplatte sind bei diesen Ausführungen beispielsweise aus Aluminium-Strangpress-Hohlprofilen hergestellt oder mittels der Aluminium-Rollbond-Technologie. Andere Kühlkanalgeometrien werden aus Kupfer oder ähnlichen Materialien gelötet. Angestrebt wird ein geringer Wärmeübergangswiderstand zwischen der Bodenplatte des Batteriemoduls und dem Kühlmittel, z.B. Kühlwasser oder ein anderes Kühlfluid.

Diese aus dem Stand der Technik bekannten Batteriemodule weisen mehrere signifikante Nachteile auf. Die Herstellung und der Einbau der elektrisch isolierenden Schichten (z.B. Folien) ist aufwendig und teuer. Außerdem ist der Einbau fehleranfällig, denn es können sich beispielsweise Luftblasen bilden. Und schließlich wirkt die elektrische Isolation dem zweiten Entwurfsziel, nämlich einer guten Entwärmung der Batteriezellen, entgegen, da das Isolationsmaterial in der Regel schlechte Wärmeleiteigenschaften aufweist.

Die Herstellung von Kühlkanalgeometrien aus metallischen Basismaterialien ist ebenfalls sehr aufwendig und fehleranfällig. Unabhängig von der verwendeten Technologie (Löten, Hartlöten, Schweißen und dergleichen) ist es nämlich sehr schwierig, die Dichtigkeit der Verbindungen auch bei höheren Drücken zu gewährleisten. In dieser Hinsicht ist die Kaltverschweißung nach dem Aluminium-Rollbondverfahren günstiger, doch um den Preis eines anderen Nachteils: Das Aluminium muss nämlich nach dem Walzen spannungsarm geglüht werden. Dadurch verliert es seine Festigkeit und kann danach keine tragende Funktion mehr übernehmen.

Es hat auch schon Versuche gegeben, die Batteriemodule aus üblichem Kunststoff aufzubauen. Diese Versuche sind jedoch gescheitert, da die bei der üblichen Fertigung in Spritzguss erforderlichen Wandstärken zu einem viel zu hohem Wärmeübergangswiderstand führten, was keine zuverlässige Entwärmung der Batteriezellen zuließ. Daher können Batteriemodule aus üblichem Kunststoff nur für leistungsschwache Anwendungen eingesetzt werden, bei denen die Batteriezellen keiner Entwärmung bedürfen.

Die Erfinder der vorliegenden Erfindung haben es sich zum Ziel gesetzt, ein Batteriemodul und ein zugehöriges Modulgehäuse (oder Batteriewanne) zu schaffen, welches die oben genannten Nachteile des bekannten Standes der Technik vermeidet, oder wenigstens wesentlich reduziert, insbesondere was den Herstellungsaufwand und/oder die Herstellungskosten, die elektrische Isolierung und/oder die Entwärmung der Batteriezellen betrifft.

Sie mussten dabei ein technisches Vorurteil der Fachwelt überwinden, die wie dargestellt der Meinung war, Batteriemodule aus Kunststoff seien nur für leistungsarme Anwendungen geeignet, bei der aufgrund der geringen erzeugten Wärme keine Maßnahmen getroffen werden müssen, um die Batteriezellen zu entwärmen.

Die Druckschriften KR20200033784A, DE202019102427U1 und WO2020/138211A1 offenbaren bekannte Modulgehäuse.

Im Gegensatz hierzu ist es den Erfindern gelungen, zu zeigen, dass Batteriemodule auch für leistungsstärkere Anwendungen (mit Wärmeabfuhr der Batteriezellen) aus Kunststoff gefertigt werden können, wenn die Lehre der vorliegenden Erfindung beachtet wird.

Erfindungsgemäß werden ein Modulgehäuse für ein Batteriemodul gemäß Anspruch 1 und ein Verfahren zum Herstellen eines Modulgehäuses gemäß Anspruch 13 vorgeschlagen.

Es hat sich überraschenderweise herausgestellt, dass die Kombination dieser

Maßnahmen aus den unabhängigen Ansprüchen - in Kürze die Beimischung eines gut wärmeleitenden Füllstoffs zu dem verwendeten Kunststoff, und die konstruktive Hinzufügung einer durch einen Bodendeckel verschlossenen Kühlkanalgeometrie oder Kühlkanalstruktur zu der Bodenplatte - ausreichend ist, um eine thermische Ableitung der von den Batteriezellen erzeugten Wärme zu gewährleisten, diese also wirksam zu entwärmen. Dies ist ein überraschender Effekt, mit dem das Fachpublikum nicht gerechnet hatte. Und die Lehre der Erfindung ermöglicht nun die Herstellung der Batteriemodule bzw. Modulgehäuse/ Batteriewannen aus dem wesentlich preiswerteren und leichter zu verarbeitenden Kunststoff, beispielsweise durch Kunststoffspritzen, Gießen, Tiefziehen oder andere bekannte Techniken.

Die vorliegende Erfindung hat noch andere Vorteile gegenüber dem Stand der Technik. So sind keine zusätzlichen Isoliermaßnahmen wie die bekannten Folien mehr erforderlich, um die Zellen gegenüber dem sie umgebenden Modulgehäuse zu isolieren. Auch hat sich herausgestellt, dass die mechanische Steifigkeit des aus Kunststoff gefertigten Batteriemoduls der Steifigkeit der bekannten, aus metallischen Basismaterialien gefertigten Batteriemodule entspricht oder diese sogar übertrifft. Dazu trägt nicht zuletzt der Bodendeckel bei, der die Kühlkanalgeometrie der Bodenplatte von unten abdeckt und diese versteift. Aber auch eine geschickte konstruktive Gestaltung der Kühlkanäle kann zur mechanischen Festigkeit und Beanspruchbarkeit beitragen, ebenso wie das noch zu besprechende Vergießen der Batteriezellen in dem Modulgehäuse.

Eine weitere vorteilhafte Maßnahme zur Erhöhung der mechanischen Steifigkeit und Festigkeit besteht in der Beimischung von Glasfasern zu dem bei der Herstellung des erfindungsgemäßen Batteriemoduls verwendeten Kunststoff.

In einer bevorzugten Ausführungsform der Erfindung wird dem Kunststoffmaterial ausreichend wärmeleitender Füllstoff beigegeben, um eine Wärmeleitfähigkeit von wenigstens 1,0 W/(m•K) zu erreichen.

In praktischen Versuchen hat sich herausgestellt, dass ein für die vorliegende Erfindung besonders geeigneter wärmeleitender Füllstoff Aluminiumoxid (Al₂O₃) ist. In anderen Versuchen hat sich auch Bornitrid (BN) als sehr geeignet herausgestellt.

Das Kunststoffmaterial selbst ist vorzugsweise ein mechanisch belastbares, kühlmittelbeständiges Resin, also ein Harz bzw. Gießharz.

Während es für die Ausführung der vorliegenden Erfindung ausreichend ist, wenn wenigstens ein Bestandteil des Modulgehäuses aus Kunststoffmaterial mit zugefügtem gut wärmeleitendem Füllstoff gefertigt ist, sind nach einer vorteilhaften Weiterbildung der Erfindung mehrere oder alle Bestandteile des Modulgehäuses, insbesondere die Seitenwände und/oder der Bodendeckel, aus diesem modifizierten Kunststoffmaterial hergestellt. Dies trifft auch auf die Kühlkanalgeometrie, insbesondere die Wände der das Kühlfluid leitenden Struktur, zu.

Wenn die Bodenplatte aus Kunststoff mit einer Beimischung von gut leitendem Füllstoff besteht, ist es besonders günstig, wenn die Kühlkanäle in den Körper der Bodenplatte eingespritzt oder eingegossen sind. Die Kühlkanalstruktur kann dann zusammen mit dem Guss bzw. dem Spritzen der Bodenplatte erzeugt werden, so dass die Herstellung insgesamt nur einen Arbeitsgang benötigt.

Die vorliegende Erfindung sieht in vorteilhaften Ausführungsformen noch weitere Maßnahmen vor. So kann die Bodenplatte und/oder der Bodendeckel mit Strömungsleitelementen für ein Kühlfluid versehen sein. Diese sorgen für eine Verwirbelung und/oder Delaminarisierung der Kühlfluidströmung, was die Wärmeabfuhr verbessert. Vorzugsweise, aber nicht notwendigerweise, werden die Strömungsleitelemente in den Bodendeckel integriert. Fertigungstechnisch hat es sich als besonders vorteilhaft herausgestellt, wenn die (mit der Kühlmittelgeometrie versehene) Bodenplatte und der Bodendeckel mittels Kunststoff-Reibschweißung miteinander verbunden sind. Diese Verbindung ist besonders dauerhaft und dicht.

Ein Vor- und/oder ein Rücklauf zu den Kühlkanälen ist bevorzugt in wenigstens eine Seitenwand des Modulgehäuses integriert. Im Spritz- oder Gießverfahren können diese Zugänge zur Kühlkanalgeometrie dann zusammen mit den Seitenwänden hergestellt werden, was ein deutlicher Vorteil gegenüber separaten Bauelementen bei einem aus Metall gefertigten Batteriemodul nach dem Stand der Technik darstellt.

Die in die Bodenplatte integrierten Strömungs- oder Kühlkanäle verlaufen vorzugsweise quer zu den Zellspannungspotenzialen der Batteriezellen.

Eine besonders vorteilhafte Weiterbildung der Erfindung ergibt sich, wenn wenigstens eine Seitenwand des Batteriemoduls mit weiteren Kühlkanälen, also einer Kühlkanalstruktur, versehen ist. Bevorzugt, aber nicht notwendigerweise, ist dies eine der kurzen Seitenwände. Dann können nämlich auf der mit einer Kühlkanalstruktur versehenen Seitenwand sogenannte "balancing resistors", also Abgleichwiderstände zum Symmetrieren des Ladungsinhalts der Batteriezellen, angebracht werden. Das von den Abgleichwiderständen erzeugte Wärmeaufkommen (typischerweise etwa 30 Watt) kann problemlos von den in der Seitenwand integrierten Kühlkanälen abgeführt werden. Natürlich kann auch mehr als eine Seitenwand mit solchen zusätzlichen Kühlkanälen versehen werden.

In einer erfindungstypischen bevorzugten Ausgestaltung mündet der Kühlfluid-Rücklauf der Bodenplatte zunächst in die Kühlkanalstruktur der Seitenwand. Auf einer Fläche von ca. 3 cm x 5 cm, welche der Fläche der Abgleichwiderstände entspricht, wird die Kühlkanalstruktur der Seitenwand anschließend durch ein Deckel-Kunststoffelement mittels Kunststoff-Reibschweißen verschlossen. Die Kühlkanalstruktur enthält an ihrem entgegengesetzten Ende zusätzlich das Anschlussstück für den Rücklauf des Kühlfluids. Das Deckel-Kunststoffelement besteht ebenfalls aus Kunststoff mit Beimischung eines gut wärmeleitenden Füllstoffs.

Die vorliegende Erfindung schafft somit ein Modulgehäuse (auch als Modulwanne bezeichnet) und das dazugehörende Batteriemodul, welches neben einer hohen mechanischen Festigkeit (welche durch eine Glasfaserbeimischung noch erhöht werden kann) eine erhöhte Wärmeleitfähigkeit von 1,0 W/(m•K) oder mehr aufweist. Dies wird durch Zugabe elektrisch isolierender Füllmaterialien wie Al₂O₃ oder BN erreicht. Modulbodenunterseitig wird eine Kühlkanalstruktur geschaffen; diese weist bevorzugt eine Endhöhe von 1 mm bis 3 mm auf. Dabei sollen die Batteriezellen desselben elektrischen Potenzials im Nennbetrieb ähnliche Temperaturen erreichen.

### Die Strömungskanäle sind im Wesentlichen quer zu den

### Zellspannungspotenzialen angeordnet.

Die vorgehaltene Kühlkanalstruktur kann bodenplattenseitig, bevorzugt aber bodendeckelseitig Maßnahmen zur Delaminarisierung bzw. Verwirbelung der Kühlmittelströmung aufweisen, um den Wärmeübergang zwischen Bodenplattenmaterial und Kühlmittel weiter zu verbessern. Der Bodendeckel schließt die Kühlkanalstruktur von unten ab und wird mittels Kunststoff-Reibschweißen mit dem Modulboden dauerhaft und dicht verbunden. Die Abstände zwischen den Verbindungsstellen zwischen Bodendeckel und Bodenplatte sind vorzugsweise so gewählt, dass bei Druckbeaufschlagung der Kühlkanalstruktur mit einem Kühlmittelüberdruck von beispielsweise 2 bar die Streckgrenze des Kunststoffs an keiner Stelle überschritten wird.

Die Batteriezellen werden in die (obere) Modulwanne mittels Hängeguss-Verfahren eingebracht, wobei auf eine Minimierung des Abstandes vom Zellboden (Boden einer Batteriezelle) zur aus Kunststoff gefertigten Bodenplatte geachtet wird. Die längste Batteriezelle sitzt direkt auf der Bodenplatte auf (denn dadurch wird der Abstand minimiert, was geringsten Wärmeübergangswiderstand bedeutet); bei der kürzesten Batteriezelle befindet sich etwas Vergussmasse zwischen dem Zellboden und der Bodenplatte. Besondere Maßnahmen zur elektrischen Isolierung sind nicht erforderlich. Die Durchschlagsfestigkeit des Kunststoffmaterials der Modulwanne sollte allerdings 20 kV/mm oder mehr betragen. Die Stärke der Bodenplatte wird in Abhängigkeit von dem zur Verfügung stehenden Fertigungsverfahren möglichst dünn gewählt, jedenfalls nicht dicker als 2,0 mm.

Je nach Bedarf kann zur weiteren Verringerung des Wärmeübergangswiderstands zum Kühlfluid (z.B. Wasser) direkt unter jeder Batteriezelle in einem kreisförmigen Bereich, dessen Durchmesser kleiner als der Zelldurchmesser ist, die Bodenplattenstärke weiter reduziert werden, z.B. auf 1 mm, sofern der Fertigungsprozess dies hergibt.

Der Vor- und Rücklaufanschluss an die Kühlkanalgeometrie ist in den Rand des erfindungsgemäßen Batteriemoduls integriert. Dabei werden separate Fertigungsschritte für die Bereitstellung von Anschlussstrukturen eingespart.

In einer besonders vorteilhaften Ausführungsform der vorliegenden Erfindung stehen die Batteriezellen aufrecht in dem Modulgehäuse. Sie sind dort mit einer sie umhüllenden Vergussmasse fixiert, die wenigstens bis zur halben Höhe der Batteriezellen reicht. Dies hat eine signifikante Erhöhung der Steifigkeit des gesamten Batteriemoduls zur Folge, besonders wenn die Vergussmasse aus Polyurethan oder Epoxidharz besteht. Damit lassen sich Versteifungen des Kunststoff-Batteriemoduls erzielen, welche über den entsprechenden Werten metallischer Modulstrukturen liegen. Als Gussverfahren kommt wiederum das Hängeguss-Verfahren in Frage.

Bei Verwendung einer alternativen Vergussmethode kann z.B. der Modulboden (Bodenplatte) Führungsstifte zur positionsgenauen Anordnung der Batteriezellen enthalten. Werden die Batteriezellen im Anschluss nur in dieses Raster hinein gestellt und dann vergossen, so muss man zwar die unterschiedlichen Längen der Batteriezellen und damit die Unebenheit der Anschlussebene berücksichtigen, kann aber dafür den Vergussvorgang vereinfachen. Alle Batteriezellen stehen dann direkt auf dem Kunststoffboden auf, so dass keine weitere Erhöhung des Wärmeübergangswiderstands zwischen Batteriezelle und Kühlmittel stattfindet.

Die vorliegende Erfindung bezieht sich auf ein Modulgehäuse gemäß Anspruch 1.

Dabei können bevorzugte oder verbesserte Ausführungsformen des Modulgehäuses eines oder mehrere Merkmale aufweisen, die schon im Zusammenhang mit dem Batteriemodul besprochen wurden, z.B. die Verwendung von Aluminiumoxid oder Bornitrid als wärmeleitender Füllstoff, der dem Kunststoffmaterial des Modulgehäuses zugesetzt wird, oder der Einsatz von Strömungsleitelementen zum Zweck der Verwirbelung der Kühlfluidströmung.

Schließlich betrifft die vorliegende Erfindung auch ein Verfahren zum Herstellen eines Modulgehäuses für ein Batteriemodul gemäß Anspruch 13.

Das erfindungsgemäße Verfahren kann mit zusätzlichen Schritten entsprechend den Unteransprüchen weiter verbessert oder effektiver gestaltet werden, so zum Beispiel durch das Einspritzen oder Eingießen der Kühlkanäle in den Körper der Bodenplatte oder das Kunststoff-Reibverschweißen der Bodenplatte und des Bodendeckels. Als besonders vorteilhaft wird ein Verfahren angesehen, bei dem die Batteriezellen in aufrechter Stellung in das Modulgehäuse eingesetzt werden und die Batteriezellen anschließend mit Vergussmasse (z.B. Polyurethan oder Epoxidharz) wenigstens bis zur halben Höhe der Batteriezellen vergossen werden, da hierdurch das Modulgehäuse mechanisch signifikant versteift wird.

Weitere Merkmale und Vorteile der vorliegenden Erfindung ergeben sich aus der nachfolgenden Beschreibung bevorzugter Ausführungsbeispiele sowie aus den beigefügten Zeichnungen. Diese zeigen:
- Fig. 1: eine perspektivische Ansicht eines erfindungsgemäßen Batteriemoduls mit eingelegten Batteriezellen,
- Fig. 2: die Unterseite des Batteriemoduls nach Fig. 1, ebenfalls in perspektivischer Darstellung,
- Fig. 3: ein Detail mit aufgeschnittenem Kühlmittelzufluss, Seitenwand und der in die Bodenplatte integrierten Kühlstruktur,
- Fig. 4: eine der Fig. 3 entsprechende Darstellung, aber ohne den Kühlmittelzufluss und
- Fig. 5: die perspektivische Ansicht einer weiteren Ausführungsform, bei der eine Kühlmittelstruktur auch in einer Seitenwand vorgesehen ist.

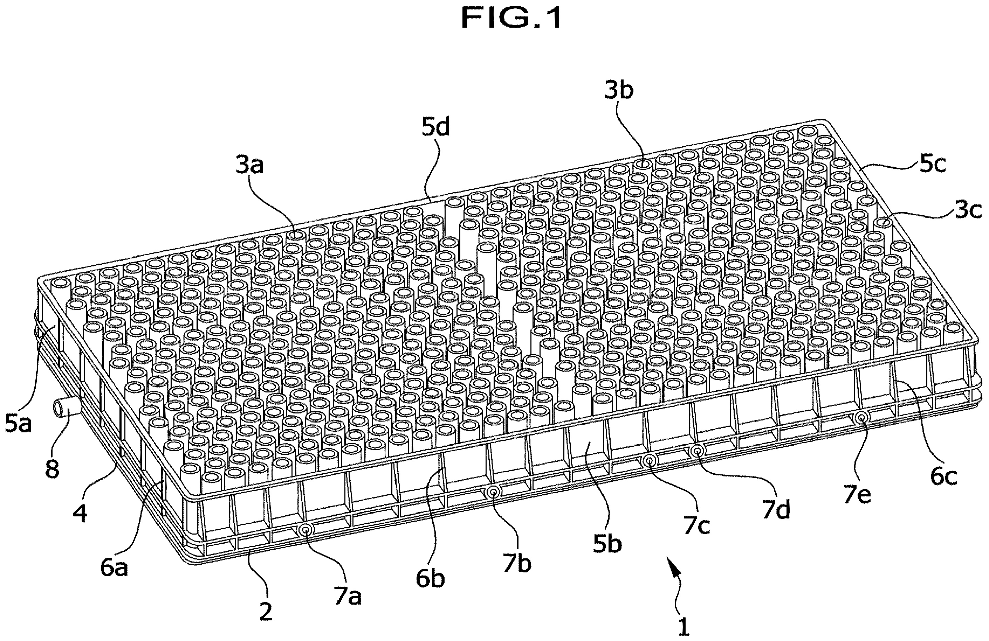

In der Fig. 1 ist ein erfindungsgemäßes Batteriemodul zu sehen, welches im Ganzen mit 1 bezeichnet ist. Eine Vielzahl von Batteriezellen ist bereits stehend in die Batteriewanne, die auch als Modulgehäuse 2 bezeichnet wird, eingebaut; beispielhaft sind einige dieser Batteriezellen mit den Bezugszeichen 3a bis 3c versehen. Die Pluspole der Batteriezellen weisen in der Darstellung der Fig. 1 nach oben; dies entspricht auch der späteren Einbauorientierung des Batteriemoduls 1. Die Batteriezellen sind, auch wenn dies in der Fig. 1 schlecht erkennbar ist, mit Vergussmasse aus Polyurethan oder Epoxidharz vergossen, und zwar bis mindestens zur Hälfte der Zellhöhe.

Dabei stehen die einzelnen Batteriezellen auf einer Bodenplatte 4 auf. Diese Bodenplatte bildet zusammen mit Seitenwänden 5a, 5b, 5c und 5d das Modulgehäuse 2.

Die Seitenwände 5a bis 5d sind mit Verstärkungsrippen versehen, die konstruktiv auf der Außenseite der Seitenwände vorgesehen sind und die der Erhöhung der mechanischen Steifigkeit des Modulgehäuses 2 beziehungsweise des Batteriemoduls 1 dienen. Einige dieser Verstärkungsrippen sind in der Fig. 1 beispielhaft mit den Bezugszeichen 6a, 6b und 6c versehen.

Einpressmuttern 7a bis 7e dienen der späteren Befestigung des Batteriemoduls 1 - zusammen mit anderen Batteriemodulen - in einem Batteriespeicher oder Batteriesystem. Die in die Einpressmuttern 7a bis 7e eingreifenden Schrauben sind in der Fig. 1 nicht gezeigt.

In die Bodenplatte 4 sind in noch zu beschreibender Weise Kühlmittelkanäle integriert, so dass sich eine Kühlkanalstruktur oder Kühlkanalgeometrie ergibt, die der Entwärmung der Batteriezellen dient. In der Fig. 1 ist hiervon lediglich der Vorlaufanschluss 8 für das Kühlfluid - beispielsweise Wasser - zu erkennen.

Die Seitenwände 5a bis 5d des Modulgehäuses 2, und die Bodenplatte 4, sind aus einem Kunststoffmaterial gefertigt, dem ein gut wärmeleitender Füllstoff zugesetzt ist, wodurch sich die Wärmeleitfähigkeit des Gemischs auf wenigstens 1,0 W/(m•K) erhöht. Als geeignete Füllstoffe haben sich Aluminiumoxid (Al₂O₃) oder Bornitrid (BN) erwiesen.

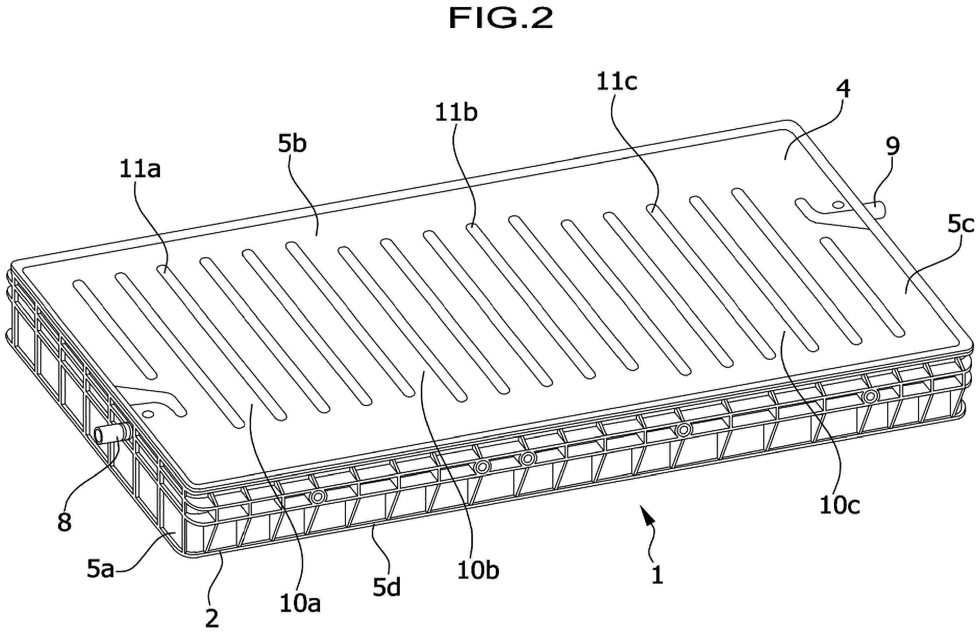

Die Fig. 2 zeigt das Batteriemodul 1 in perspektivischer Ansicht von seitlich unten. Gleiche Bezugszeichen beziehen sich auf dieselben Elemente wie in der Fig. 1. Die Bodenplatte 4 ist wie ersichtlich mit einer Struktur von Kühlkanälen, respektive einer Kühlkanalgeometrie, versehen. Einige dieser Kühlkanäle sind beispielhaft mit den Bezugszeichen 10a, 10b und 10c versehen. In ihnen fließt das Kühlfluid, beispielsweise unter Druck stehendes Wasser, von dem Vorlaufanschluss 8 zu dem Rücklaufanschluss 9. Strömungsleitelemente, von denen einige beispielhaft mit 11a, 11b und 11c bezeichnet sind, sorgen für eine Verwirbelung beziehungsweise eine Delaminarisierung der Kühlfluidströmung. Alle diese Maßnahmen zusammen sorgen für eine effektive Entwärmung der Batteriezellen (auch von Hochleistungszellen) und ermöglichen überhaupt erst die Fertigung praktisch aller wesentlichen Komponenten des Batteriemoduls aus Kunststoff, was bisher von Fachleuten für nicht möglich oder praktikabel gehalten wurde.

Die mit einer Kühlkanalstruktur versehene Bodenplatte 4 wird von unten mit einem Bodendeckel abgedeckt, und dieser wird mit der Bodenplatte 4 durch Kunststoff-Reibverschweißung verbunden, was nicht nur ein preiswertes Verfahren darstellt, sondern auch für eine langfristig dichte Verbindung sorgt, was gerade bei einem unter Druck stehenden Kühlfluid wie Wasser wichtig ist. In der Fig. 2 ist der Bodendeckel nicht gezeigt, um die Kühlkanalstruktur sichtbar zu machen; der Bodendeckel ergibt sich jedoch aus den folgenden Zeichnungen.

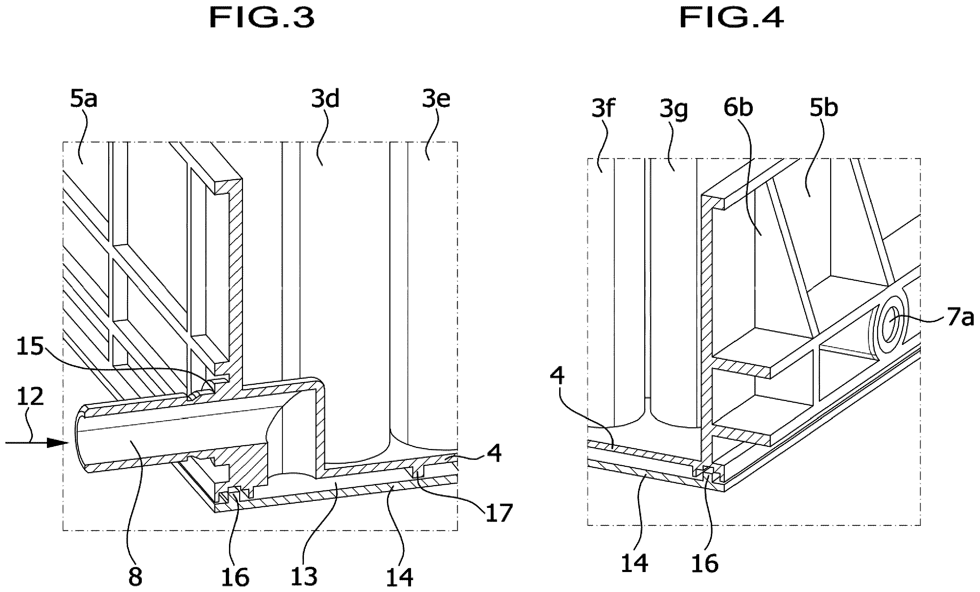

Die weiteren Details der vorliegenden Erfindung ergeben sich großenteils aus der Fig. 3. Diese zeigt den aufgeschnittenen Kühlmittelzufluss 8, dem Kühlfluid, beispielsweise unter Druck stehendes Wasser, in Richtung des Pfeils 12 zugeführt wird. Das Kühlmittel wird um 90⁰ umgeleitet und tritt in einen Bereich 13 zwischen der Bodenplatte 4 und einem Bodendeckel 14 ein. Auf der Unterseite der Bodenplatte 4 befindet sich die anhand der Fig. 2 gezeigte Kühlkanalstruktur mit der Führung für das Kühlfluid sowie die Strömungsleitelemente, die für eine Verwirbelung der Kühlfluidströmung und damit für einen effektiven Wärmeaustausch zwischen den Batteriezellen 3d, 3e und dem Kühlmittel, im Endeffekt also für eine bessere Entwärmung der Batteriezellen sorgen.

Der Kühlmittelzufluss 8 ist mit der Seitenwand 5a und der Bodenplatte 4 fluiddicht verbunden, entweder indem er zusammen mit diesen gegossen oder gespritzt, oder mit ihnen über eine geeignete Verbindungstechnik wie Kunststoff-Reibschweißung verbunden wird. In der in Fig. 3 gezeigten Ausführungsform ist der Kühlmittelzufluss 8 zusammen mit der Bodenplatte 4 hergestellt, das heißt gegossen oder gespritzt worden, und wurde anschließend bei 15 mit der Seitenwand 5a verschweißt.

Die Fig. 3 zeigt auch die Verbindung 16 zwischen der Bodenplatte 4 und dem unterseitig auf diese aufgesetzten Bodendeckel 14. Diese Verbindung muss kühlmitteldicht, also beispielsweise mittels Kunststoff-Reibschweißung, ausgeführt sein. Auch wird angestrebt, dass die Strömungsleitelemente 17 sowohl mit der Bodenplatte 4 als auch mit dem Bodendeckel 14 in Kontakt stehen, so dass sich eine Zwangsführung für das Kühlmittelfluid ergibt. Im vorliegenden Ausführungsbeispiel werden die Strömungsleitelemente 17 zusammen mit dem Bodendeckel 14 gegossen oder gespritzt und liegen andererseits dichtend an der Bodenplatte 4 an.

Der Rücklaufanschluss für das Kühlmittel ist in der Fig. 3 nicht gezeigt, aber prinzipiell genauso konstruiert wie der Kühlmittelzufluss 8.

Die Fig. 4 zeigt einen anderen Schnitt durch die Seitenwand 5b mit der Verstärkungsrippe 6b sowie der in die Verstärkungsstruktur der Seitenwand 5b integrierten Einpressmutter 7a. Mit einer Schraube wird diese später an dem Batteriespeicher bzw. dem Batteriesystem verbunden.

Außer den Batteriezellen 3f und 3g zeigt die Fig. 4 auch die Bodenplatte 4 sowie den die Bodenplatte von unten abdeckenden und mit dieser reibverschweißten Bodendeckel 14. Die Schweißnaht 16 ist auch in dieser Figur gezeigt.

Alle in den Fig. 3 und 4 gezeigten Bauelemente, natürlich mit Ausnahme der Batteriezellen 3d bis 3g, sind aus einem handelsüblichen Kunststoff unter Zusatz eines wärmeleitenden Füllstoffs wie Al₂O₃ oder BN nach der Lehre der vorliegenden Erfindung gefertigt.

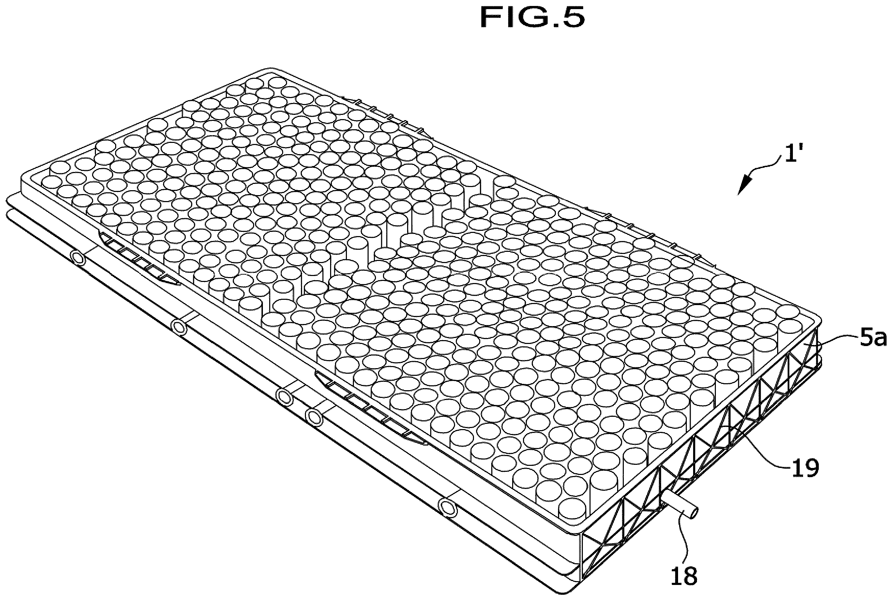

Eine vorteilhafte Weiterbildung der Erfindung ist in dem Ausführungsbeispiel nach Fig. 5 gezeigt. Das in der perspektivischen dargestellte Batteriemodul 1' ist wie bei den vorhergehenden Ausführungsbeispielen mit Seitenwänden inklusive von Einpressmuttern, einer mit einer Kühlkanalstruktur versehenen Bodenplatte und einem die Bodenplatte von unten abdeckenden Bodendeckel versehen, und auf der Bodenplatte stehen Batteriezellen in senkrechter Ausrichtung. Diese Elemente entsprechen denjenigen in den vorhergehenden Figuren und sind daher nicht mehr einzeln mit Bezugszeichen versehen. Die Darstellung in der Fig. 5 ist so gewählt, dass das Element 18 den Kühlmittelabfluss (und nicht den Kühlmittelzufluss) zeigt.

Ein Unterschied gegenüber den vorhergehenden Ausführungsformen ergibt sich jedoch bei der kurzen Seitenwand 5a. Diese ist zusätzlich mit mehreren Kühlkanälen 19, also einer weiteren Kühlkanalstruktur oder -geometrie, versehen, welche an die Haupt-Kühlkanalstruktur zwischen Bodenplatte und Bodendeckel angeschlossen ist, und zwar in der Weise, dass Kühlmittel zunächst die Haupt-Kühlkanalstruktur durchquert, dann die weitere Kühlkanalstruktur 19 der Fig. 5, und schließlich durch den Kühlmittelabfluss 18 zurückgeführt wird.

Die mit der weiteren Kühlmittelstruktur 19 versehene Seitenwand 5a wird noch mit einem zusätzlichen, in der Fig. 5 nicht gezeigten Kunststoff-Deckelelement abgeschlossen, welches ebenfalls nach der Lehre der vorliegenden Erfindung aus Kunststoff, der mit einem wärmeleitenden Füllstoff versetzt ist, hergestellt und mit den Rändern der Seitenwand 5a reibverschweißt wird.

Das Anbringen der weiteren Kühlkanalstruktur an der Seitenwand ermöglicht es, nach dem Anbringen des Kunststoff-Deckelelements auf diesem (in hier nicht speziell gezeigter Weise) Abgleichwiderstände anzubringen. Diese Abgleichwiderstände (balancing resistors) dienen zum Symmetrieren des Ladungsinhalts der Batteriezellen. Sie produzieren eine erhebliche Abwärme, welche abgeführt werden muss, was durch die vorliegende vorteilhafte Weiterbildung der Erfindung erreicht wird.

## Patentansprüche

1. Modulgehäuse (2) für ein Batteriemodul (1), in dem mehrere Batteriezellen (3a bis 3g) untergebracht oder unterzubringen sind und das wenigstens aus einer Bodenplatte (4) und zumindest einer Seitenwand (5a, 5b, 5c, 5d), vorzugsweise mehreren Seitenwänden, besteht, wobei die Bodenplatte (4) aus Kunststoffmaterial mit einer Beimischung von gut wärmeleitendem Füllstoff besteht
- die Bodenplatte (4) auf ihrer Unterseite mit Kühlkanälen (10a, 10b, 10c) versehen ist
- die Kühlkanäle (10a, 10b, 10c) in den Körper der Bodenplatte (4) eingespritzt oder eingegossen sind und
- die Kühlkanäle (10a, 10b, 10c) der Bodenplatte (4) von unten mit einem Bodendeckel (14) verschlossen sind.

2. Modulgehäuse nach Anspruch 1, **dadurch gekennzeichnet, dass** mehrere oder alle Bestandteile des Modulgehäuses (2) aus einem Kunststoffmaterial gefertigt sind, dem ein gut wärmeleitender Füllstoff beigemischt ist.

3. Modulgehäuse (2) nach Anspruch 1 oder 2, bei dem das Kunststoffmaterial mit dem wärmeleitenden Füllstoff eine Wärmeleitfähigkeit von wenigstens 1,0 W/(m•K) aufweist.

4. Modulgehäuse (2) nach einem der Ansprüche 1 bis 3, bei dem der gut wärmeleitende Füllstoff Aluminiumoxid oder Bornitrid ist.

5. Modulgehäuse (2) nach wenigstens einem der vorhergehenden Ansprüche, **dadurch gekennzeichnet, dass** das Kunststoffmaterial ein Harz, vorzugsweise ein Gießharz, ist.

6. Modulgehäuse (2) nach wenigstens einem der vorhergehenden Ansprüche, **dadurch gekennzeichnet, dass** die Bodenplatte (4) und/oder der Bodendeckel (14), vorzugsweise der Bodendeckel (14), mit Strömungsleitelementen (11a, 11b, 11c) für ein Kühlfluid versehen sind, die für eine Verwirbelung und/oder Delaminarisierung der Kühlfluidströmung sorgen.

7. Modulgehäuse (2) nach wenigstens einem der vorhergehenden Ansprüche, **dadurch gekennzeichnet, dass** die Bodenplatte (4) und der Bodendeckel (14) mittels Kunststoff-Reibschweißung miteinander verbunden sind.

8. Modulgehäuse (2) nach wenigstens einem der vorhergehenden Ansprüche, **dadurch gekennzeichnet, dass** ein Vor- (8) und/oder ein Rücklauf (9) zu den Kühlkanälen (10a, 10b, 10c) in wenigstens eine Seitenwand (5a, 5b, 5c, 5d) des Modulgehäuses (2) integriert, vorzugsweise eingespritzt oder eingegossen, ist.

9. Modulgehäuse (2) nach wenigstens einem der vorhergehenden Ansprüche, **dadurch gekennzeichnet, dass** die Kühlkanäle (10a, 10b, 10c) quer zu den Zellspannungspotenzialen der Batteriezellen (3a bis 3g) verlaufen.

10. Modulgehäuse (2) nach wenigstens einem der vorhergehenden Ansprüche, **dadurch gekennzeichnet, dass** wenigstens eine Seitenwand (5a) mit weiteren Kühlkanälen (19) versehen ist und dass an dieser Seitenwand (5a) Abgleichwiderstände zum Symmetrieren des Ladungsinhalts der Batteriezellen (3a bis 3g) angebracht sind.

11. Modulgehäuse (2) nach wenigstens einem der vorhergehenden Ansprüche, bei dem die Batteriezellen (3a bis 3g) aufrecht in dem Modulgehäuse (2) stehen, **dadurch gekennzeichnet, dass** die Batteriezellen (3a bis 3g) mit einer sie umhüllenden Vergussmasse fixiert sind, die wenigsten bis zur halben Höhe der Batteriezellen (3a bis 3g) reicht.

12. Batteriemodul (1) für den Einsatz in einem Batteriesystem, vorzugsweise in Elektrofahrzeugen, mit einem Modulgehäuse (2), in dem mehrere Batteriezellen (3a bis 3g) untergebracht sind und das wenigstens aus einer Bodenplatte (4) und zumindest einer Seitenwand (5a, 5b, 5c, 5d), vorzugsweise mehreren Seitenwänden, besteht, wobei das Modulgehäuse (2) gemäß einem oder mehreren der Ansprüche 1 bis 11 ausgebildet ist.

13. Verfahren zum Herstellen eines Modulgehäuses (2) gemäß Anspruch 1, mit folgenden Verfahrensschritten:
- Herstellen einer Bodenplatte (4) und wenigstens einer Seitenwand (5a, 5b, 5c, 5d) aus einem Kunststoffmaterial, dem ein gut wärmeleitender Füllstoff beigemischt ist;
- Spritzen oder Gießen von Kühlkanälen (10a, 10b, 10c) in den Körper der Bodenplatte auf der Unterseite der Bodenplatte (4); und
- Herstellen eines Bodendeckels (14), der die Kühlkanäle (10a, 10b, 10c) der Bodenplatte (4) von unten verschließt.

14. Verfahren nach Anspruch 13, **gekennzeichnet durch** das Verwenden von Aluminiumoxid oder Bornitrid als wärmeleitendem Füllstoff.

15. Verfahren nach wenigstens einem der Ansprüche 13 bis 14, **gekennzeichnet durch** das Reibverschweißen der Bodenplatte (4) und des Bodendeckels (14).

16. Verfahren nach wenigstens einem der Ansprüche 13 bis 15, **gekennzeichnet durch** das Einsetzen von Batteriezellen (3a bis 3g) in das Modulgehäuse (2) in aufrechter Stellung und das Vergießen der Batteriezellen (3a bis 3g) mit Vergussmasse wenigstens bis zur halben Höhe der Batteriezellen (3a bis 3g).

## Claims

1. A module housing (2) for a battery module (1), in which a plurality of battery cells (3a to 3g) are accommodated or accommodatable and which comprises at least a baseplate (4) and at least one sidewall (5a, 5b, 5c, 5d), preferably a plurality of sidewalls, wherein the baseplate (4) consists of a plastics material with an admixture of filler material with good heat conduction
• the baseplate (4) is provided on its bottom side with cooling channels (10a, 10b, 10c)
• the cooling channels (10a, 10b, 10c) are injected or poured into the body of the baseplate (4) and
• the cooling channels (10a, 10b, 10c) of the baseplate (4) are closed from below by a bottom cover (14).

2. A module housing according to claim 1, **characterised in that** some or all components of the module housing (2) are made from a plastics material to which is added a filler material with good heat conduction.

3. A module housing (2) according to claim 1 or 2, in which the plastics material with the filler material with good heat conduction has a thermal conductivity of at least 1.0 W/(m•K).

4. A module housing (2) according to any one of claims 1 to 3, in which the filler material with good heat conduction is aluminium oxide or boron nitride.

5. A module housing (2) according to at least one of the preceding claims, **characterised in that** the plastics material is a resin, preferably a casting resin.

6. A module housing (2) according to at least one of the preceding claims, **characterised in that** the baseplate (4) and/or the bottom cover (14), preferably the bottom cover (14), are provided with flow guidance elements (11a, 11b, 11c) for a cooling fluid, which produce turbulence and/or delamination of the cooling fluid flow.

7. A module housing (2) according to at least one of the preceding claims, **characterised in that** the baseplate (4) and the bottom cover (14) are connected to each other by plastics friction welding.

8. A module housing (2) according to at least one of the preceding claims, **characterised in that** a flow connection (8) and/or a return connection (9) to the cooling channels (10a, 10b, 10c) is integrated, preferably injected or poured, in at least one sidewall (5a, 5b, 5c, 5d) of the module housing (2).

9. A module housing (2) according to at least one of the preceding claims, **characterised in that** the cooling channels (10a, 10b, 10c) run transversely to the cell voltage potentials of the battery cells (3a to 3g).

10. A module housing (2) according to at least one of the preceding claims, **characterised in that** at least one sidewall (5a) is provided with further cooling channels (19) and that there are mounted on this sidewall (5a) balancing resistors for balancing the charges of the battery cells (3a to 3g).

11. A module housing (2) according to at least one of the preceding claims, in which the battery cells (3a to 3g) are upright in the module housing (2) **characterised in that** the battery cells (3a to 3g) are fixed by a casting compound surrounding them, which extends to at least half the height of the battery cells (3a to 3g).

12. A battery module (1) for deployment in a battery system, preferably in electric vehicles, with a module housing (2), in which there are accommodated a plurality of battery cells (3a to 3g) and which consists of at least a baseplate (4) and at least one sidewall (5a, 5b, 5c, 5d), preferably a plurality of sidewalls, wherein the module housing (2) is configured according to one or more of claims 1 to 11.

13. A method for producing a module housing (2) according to claim 1, with the following method steps:
• producing a baseplate (4) and at least one sidewall (5a, 5b, 5c, 5d) of a plastics material to which a filling material with good heat conduction is added;
• injecting or pouring cooling channels (10a, 10b, 10c) into the body of the baseplate on the bottom side of the baseplate (4); and
• producing a bottom cover (14), which closes the cooling channels (10a, 10b, 10c) of the baseplate (4) from below.

14. A method according to claim 13, **characterised by** the use of aluminium oxide or boron nitride as the filling material with good heat conduction.

15. A method according to at least one of claims 13 to 14, **characterised by** the friction welding of the baseplate (4) and the bottom cover (14).

16. A method according to at least one of claims 13 to 15, **characterised by** the deployment of battery cells (3a to 3g) in the module housing (2) in an upright disposition and the casting of the battery cells (3a to 3g) with a casting compound at least up to half of the height of the battery cells (3a to 3g).

## Revendications

1. Boîtier de module (2) pour un module de batterie (1), dans lequel plusieurs éléments de batterie (3a à 3g) sont logés ou à loger et qui est constitué d'au moins une plaque de fond (4) et d'au moins une paroi latérale (5a, 5b, 5c, 5d), de préférence plusieurs parois latérales, dans lequel la plaque de fond (4) est constituée de matière plastique mélangée avec une charge bien thermoconductrice
- la plaque de fond (4) est pourvue sur sa face inférieure de canaux de refroidissement (10a, 10b, 10c)
- les canaux de refroidissement (10a, 10b, 10c) sont injectés ou coulés dans le corps de la plaque de fond (4) et
- les canaux de refroidissement (10a, 10b, 10c) de la plaque de fond (4) sont fermés par le bas avec un couvercle de fond (14).

2. Boîtier de module selon la revendication 1, **caractérisé en ce que** plusieurs ou tous les composants du boîtier de module (2) sont fabriqués à partir d'une matière plastique mélangée avec une charge bien thermoconductrice.

3. Boîtier de module (2) selon la revendication 1 ou 2, pour lequel la matière plastique avec la charge thermoconductrice présente une conductivité thermique d'au moins 1,0 W/(m•K).

4. Boîtier de module (2) selon l'une quelconque des revendications 1 à 3, pour lequel la charge bien thermoconductrice est de l'oxyde d'aluminium ou du nitrure de bore.

5. Boîtier de module (2) selon au moins l'une des revendications précédentes, **caractérisé en ce que** la matière plastique est une résine, de préférence une résine de coulée.

6. Boîtier de module (2) selon au moins l'une des revendications précédentes, **caractérisé en ce que** la plaque de fond (4) et/ou le couvercle de fond (14), de préférence le couvercle de fond (14), sont pourvus d'éléments de guidage d'écoulement (11a, 11b, 11c) pour un fluide de refroidissement, qui assurent un tourbillonnement et/ou une délaminarisation de l'écoulement de fluide de refroidissement.

7. Boîtier de module (2) selon au moins l'une des revendications précédentes, **caractérisé en ce que** la plaque de fond (4) et le couvercle de fond (14) sont reliés ensemble au moyen d'un soudage par friction de matière plastique.

8. Boîtier de module (2) selon au moins l'une des revendications précédentes, **caractérisé en ce qu'**une canalisation aller (8) et/ou une canalisation retour (9) vers les canaux de refroidissement (10a, 10b, 10c) est intégrée, de préférence injectée ou coulée, dans au moins une paroi latérale (5a, 5b, 5c, 5d) du boîtier de module (2).

9. Boîtier de module (2) selon au moins l'une des revendications précédentes, **caractérisé en ce que** les canaux de refroidissement (10a, 10b, 10c) s'étendent transversalement par rapport aux potentiels de tension de cellule des éléments de batterie (3a à 3g).

10. Boîtier de module (2) selon au moins l'une des revendications précédentes, **caractérisé en ce qu'**au moins une paroi latérale (5a) est pourvue d'autres canaux de refroidissement (19) et que des résistances d'équilibrage pour symétriser le contenu de charge des éléments de batterie (3a à 3g) sont montées sur cette paroi latérale (5a).

11. Boîtier de module (2) selon au moins l'une des revendications précédentes, pour lequel les éléments de batterie (3a à 3g) se tiennent verticalement dans le boîtier de module (2), **caractérisé en ce que** les éléments de batterie (3a à 3g) sont fixés avec un matériau d'enrobage les enveloppant, qui va au moins jusqu'à la mi-hauteur des éléments de batterie (3a à 3g).

12. Module de batterie (1) à insérer dans un système de batterie, de préférence dans des véhicules électriques, avec un boîtier de module (2) dans lequel sont logés plusieurs éléments de batterie (3a à 3g) et qui est constitué d'au moins d'une plaque de fond (4) et d'au moins une paroi latérale (5a, 5b, 5c, 5d), de préférence plusieurs parois latérales, dans lequel le boîtier de module (2) est réalisé selon l'une ou plusieurs des revendications 1 à 11.

13. Procédé pour fabriquer un boîtier de module (2) selon la revendication 1, avec les étapes de procédé suivantes :
- la fabrication d'une plaque de fond (4) et d'au moins une paroi latérale (5a, 5b, 5c, 5d) à partir d'une matière plastique, qui est mélangée avec une charge bien thermoconductrice ;
- l'injection ou la coulée de canaux de refroidissement (10a, 10b, 10c) dans le corps de la plaque de fond sur la face inférieure de la plaque de fond (4) ; et
- la fabrication d'un couvercle de fond (14), qui ferme les canaux de refroidissement (10a, 10b, 10c) de la plaque de fond (4) par le bas.

14. Procédé selon la revendication 13, **caractérisé par** l'utilisation d'oxyde d'aluminium ou de nitrure de bore en tant que charge thermoconductrice.

15. Procédé selon au moins l'une des revendications 13 à 14, **caractérisé par** le soudage par friction de la plaque de fond (4) et du couvercle de fond (14).

16. Procédé selon au moins l'une des revendications 13 à 15, **caractérisé par** l'insertion d'éléments de batterie (3a à 3g) dans le boîtier de module (2) en position verticale et la coulée des éléments de batterie (3a à 3g) avec un matériau d'enrobage au moins jusqu'à mi-hauteur des éléments de batterie (3a à 3g).
